(19) **Europäisches Patentamt / European Patent Office / Office européen des brevets**

(11) **EP 2 471 155 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(21) Anmeldenummer: **10732884.1**

(22) Anmeldetag: **16.07.2010**

(51) Int Cl.:
***H02J 7/00*** *(2006.01)*

(86) Internationale Anmeldenummer:
**PCT/EP2010/004351**

(87) Internationale Veröffentlichungsnummer:
**WO 2011/023263 (03.03.2011 Gazette 2011/09)**

(54) **SYSTEM ZUR SPEICHERUNG ELEKTRISCHER ENERGIE**

SYSTEM FOR STORING ELECTRIC ENERGY

SYSTÈME D'ACCUMULATION D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **27.08.2009 DE 102009039159**

(43) Veröffentlichungstag der Anmeldung:
**04.07.2012 Patentblatt 2012/27**

(73) Patentinhaber: **Voith Patent GmbH**
**89522 Heidenheim (DE)**

(72) Erfinder: **RÖSSEL, Conrad**
**89428 Syrgenstein (DE)**

(74) Vertreter: **Dr. Weitzel & Partner**
**Patent- und Rechtsanwälte mbB**
**Friedenstrasse 10**
**89522 Heidenheim (DE)**

(56) Entgegenhaltungen:
**DE-A1- 19 545 833     US-A1- 2002 196 000**
**US-A1- 2003 210 017**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein System zur Speicherung elektrischer Energie nach der im Oberbegriff von Anspruch 1 näher definierten Art. Außerdem betrifft die Erfindung ein Verfahren zur Speicherung elektrischer Energie.

Systeme zur Speicherung von elektrischer Energie, und hier insbesondere zur Speicherung von elektrischer Traktionsenergie in Elektrofahrzeugen oder insbesondere in Hybridfahrzeugen, sind aus dem allgemeinen Stand der Technik bekannt. Typischerweise sind solche Systeme zur Speicherung von elektrischer Energie mittels einzelner Speicherzellen ausgebildet, welche beispielsweise in Reihe und/oder parallel elektrisch miteinander verschaltet sind. Das Dokument US 2003/0210017 offenbart ein System gemäß dem Oberbegriff von Anspruch 1. Grundsätzlich sind als Speicherzellen dabei verschiedenartige Akkumulatorzellen oder Kondensatoren denkbar. Aufgrund der vergleichsweise hohen Energiemengen und Leistungen bei der Speicherung und Entnahme der Energie, bei der Anwendung in Antriebssträngen für Fahrzeuge, und hier insbesondere für Nutzfahrzeuge, werden als Speicherzellen bevorzugt Speicherzellen mit einem ausreichenden Energieinhalt und hoher Leistung eingesetzt. Dies können beispielsweise Akkumulatorzellen in Lithium-Ionen-Technologie sein, oder insbesondere aber Speicherzellen in Form von sehr leistungsstarken Doppelschicht-Kondensatoren. Diese Kondensatoren werden im Allgemeinen auch als Superkondensatoren, Supercaps oder Ultra-Capacitors bezeichnet.

Unabhängig davon, ob nun Superkondensatoren oder Akkumulatorzellen mit hohem Energieinhalt eingesetzt werden, ist bei derartigen Aufbauten aus einer Vielzahl von Speicherzellen, welche insgesamt oder in Blöcken in Reihe zueinander verschaltet sind, die Spannung der einzelnen Speicherzelle bauartbedingt auf einen oberen Spannungswert beziehungsweise einer Schwellenspannung begrenzt. Wird dieser obere Spannungswert, beispielsweise beim Laden des Systems zur Speicherung von elektrischer Energie überschritten, so wird die Lebensdauer der Speicherzelle im Allgemeinen drastisch reduziert.

Aufgrund von vorgegebenen Fertigungstoleranzen weichen die einzelnen Speicherzellen in ihren Eigenschaften (zum Beispiel Selbstentladung) in der Praxis typischerweise geringfügig voneinander ab. Dies hat zur Folge, dass einzelne Speicherzellen eine etwas geringere Spannung aufweisen als andere Speicherzellen in dem System. Da die maximale Spannung für das gesamte System im Allgemeinen jedoch gleich bleibt und das insbesondere beim Laden typische Ansteuerungskriterium darstellt, kommt es so unweigerlich dazu, dass andere Speicherzellen eine etwas höhere Spannung aufweisen und bei Ladevorgängen dann über die erlaubte Spannungsgrenze hinaus geladen werden. Eine solche Überspannung führt, wie bereits oben erwähnt, zu einer erheblichen Reduzierung der möglichen Lebensdauer dieser einzelnen Speicherzellen und damit des Systems zur Speicherung von elektrischer Energie.

Andererseits können in ihrer Spannung stark abgesenkte Speicherzellen in dem System zur Speicherung elektrischer Energie im zyklischen Betrieb umgepolt werden, was ebenfalls die Lebensdauer drastisch reduziert.

Um diesen Problematiken zu begegnen, kennt der allgemeine Stand der Technik im Wesentlichen zwei verschiedene Arten von sogenannten Zellspannungsausgleichen, welche jeweils zentral oder dezentral aufgebaut sind. In einer zentralen Elektronik sind alle Komponenten zum Beispiel in einer Steuereinheit zusammengefasst, während beim dezentralen Aufbau an jeweils ein bis zwei Speicherzellen die einzelnen Komponenten beispielsweise auf einer kleinen Platine für speziell diese ein bis zwei Speicherzellen angebracht sind. Die allgemein übliche Terminologie des Zellspannungsausgleichs ist hier ein wenig irreführend, da hierdurch nicht Spannungen oder genauer gesagt Energien der einzelnen Speicherzellen untereinander ausgeglichen werden, sondern es werden die Zellen mit hohen Spannungen in ihren zu hohen Spannungen reduziert. Da die Gesamtspannung(en) des Systems zur Speicherung von elektrischer Energie konstant bleiben, kann durch den sogenannten Zellspannungsausgleich jedoch eine in ihrer Spannung abgesenkte Zelle im Laufe der Zeit wieder in ihrer Spannung erhöht werden, sodass zumindest die Gefahr eines Umpolens reduziert wird.

Neben einem passiven Zellspannungsausgleich, bei dem ein elektrischer Widerstand parallel zu jeder einzelnen Speicherzelle geschaltet ist und somit eine ständige unerwünschte Entladung und auch Erwärmung des Systems zur Speicherung von elektrischer Energie stattfindet, wird auch ein aktiver Zellspannungsausgleich eingesetzt. Dabei wird zusätzlich ein elektronischer Schwellwertschalter parallel zu der Speicherzelle und in Reihe zu dem Widerstand geschaltet. Dieser auch als Bypass-Elektronik bezeichnete Aufbau lässt dabei immer nur dann einen Strom fließen, wenn die Betriebsspannung der Zelle oberhalb einer vorgegebenen Schwellenspannung liegt. Sobald die Spannung der einzelnen Speicherzelle wieder in einen Bereich unterhalb der vorgegebenen Schwellenspannung fällt, wird der Schalter geöffnet und es fließt kein Strom mehr. Aufgrund der Tatsache, dass der elektrische Widerstand über den Schalter immer dann außer Kraft gesetzt wird, wenn die Spannung der einzelnen Speicherzellen unterhalb des vorgegebenen Grenzwerts ist, kann auch eine unerwünschte Entladung des gesamten Systems zur Speicherung elektrischer Energie weitgehend vermieden werden. Auch eine ständige unerwünschte Wärmeentwicklung ist bei diesem Lösungsansatz des aktiven Zellspannungsausgleichs kein Problem. Allerdings erfolgt durch den aktiven Zellspannungsausgleich kein wirklicher Ausgleich der einzelnen Spannungen der Zellen untereinander, sondern beim Überschreiten der Schwellenspannung wird die Speicherzelle mit einem kleinen Bypass-Strom entladen, um durch einen langsamen Abbau der Überspannung das Überschreiten zu begrenzen. Der Bypass-Strom fließt dabei nur so lange, bis das System zur Speicherung von elektrischer Energie wieder entladen wird, da hierbei die entsprechende Spannungsgrenze unterschritten und der Schalter wieder geöffnet wird.

Die Lebensdauer des Systems zur Speicherung elektrischer Energie ist bei Hybridantrieben, und hier insbesondere bei Hybridantrieben für Nutzfahrzeuge, beispielsweise Omnibusse im Stadt-/Nahverkehr, von entscheidender Bedeutung. Anders als bei herkömmlichen Antriebssträngen in der für derartige Anwendungen geeigneten Leistungsklasse stellt das System zur Speicherung elektrischer Energie einen erheblichen Teil der Kosten für den Hybridantrieb dar. Daher ist es besonders wichtig, dass bei solchen Anwendungen sehr hohe Lebensdauern erzielt werden.

Neben dem erwähnten Umstand, dass die Betriebsspannung einzelner Speicherzellen im Lade-/Entladezyklus ungewollt eine Schwellenspannung übersteigt, ist die Betriebstemperatur der Speicherzelle ein weiterer die Lebensdauer entscheidend beeinflussender Parameter. Die Lebensdauer beispielsweise von Doppelschicht-Kondensatoren ist stark abhängig von der Betriebstemperatur und der dabei anliegenden Spannung. Beispielsweise können beim Betrieb eines Hybridfahrzeugs in heißer Umgebung keine niedrigen Temperaturen für das System zur Speicherung elektrischer Energie gewährleistet werden

Die Betriebstemperatur einer Speicherzelle hängt neben der Temperatur der Umgebung, in der sich die Speicherzelle befindet, auch von dem Profil der Lade-/Entladezyklen ab. Dies ist insbesondere im Fahrbetrieb von Fahrzeugen, die ein derartiges System zur Speicherung von elektrischer Energie mittels Speicherzellen einsetzen, relevant. Dort müssen beispielsweise bei der Rekuperation von Bremsenergie oder etwa bei Beschleunigungsvorgängen (Boosten) hohe Energiemengen in kurzer Zeit von den Speicherzellen aufgenommen oder abgegeben werden. Diese Lade-/Entladezyklen bewirken die Freisetzung von Abwärme, durch die sich die Speicherzellen erhitzen. Um trotz dieser erhöhten Temperaturen eine nicht übermäßig verkürzte Lebensdauer zu erzielen, wird aus diesem Grund die Schwellenspannung der Speicherzellen so niedrig gewählt, dass auch bei eventuell auftretenden hohen Betriebstemperaturen eine übermäßige Schädigung der Speicherzellen weitgehend vermieden ist.

Der Betrieb von Speicherzellen mit reduzierter Betriebsspannung bringt allerdings Nachteile mit sich. Der nutzbare Energieinhalt E einer Kondensator-Speicherzelle hängt von dem Quadrat der Betriebsspannung U der Speicherzelle ab:

$$W = \tfrac{1}{2} C U^2$$

dabei sind

W: der Energieinhalt,
C: die Kapazität und
U: die Betriebspannung der Speicherzelle.

Somit nimmt der Energieinhalt einer Speicherzelle bei einer reduzierten Betriebsspannung überproportional ab. Eine reduzierte Betriebsspannung hat zudem weiterhin zur Folge, dass zur Erzielung der gleichen Leistungsabgabe oder -aufnahme höhere Ströme fließen müssen. Gemäß

$$P_V = I^2 R_i$$

wobei

$P_V$: die Verlustleistung,
I: die Stromstärke und
$R_i$: der Innenwiderstand

der Kondensator-Speicherzelle sind, folgt aus einer höheren Stromstärke eine überproportional höhere Verlustleistung durch Stromwärmeverluste.

Eine reduzierte Betriebsspannung einer Kondensator-Speicherzelle beziehungsweise eines Energiespeichersystem basierend auf derartigen Speicherzellen erhöht somit die Lebensdauer der Speicherzellen, indem ein Überschreiten der Schwellenspannung bis zu einer bestimmten höheren Temperatur verhindert wird. Dieser Vorteil geht aber mit den erläuterten Nachteilen eines verringerten Gesamtenergiegehalts sowie einer kontraproduktiven erhöhten Verlustwärmeproduktion einher.

Es ist somit eine Aufgabe der Erfindung, ein System zur Speicherung von elektrischer Energie anzugeben, das eine effiziente Energiespeicherung und -entnahme auch bei hohen Betriebstemperaturen ermöglicht und die erwähnten Nachteile zumindest teilweise vermeidet.

Diese Aufgabe wird durch ein System mit den Merkmalen des Systems des unabhängigen Anspruchs 1 gelöst. Weitere Ausgestaltungen der Erfindung sind in den abhängigen Ansprüchen angegeben.

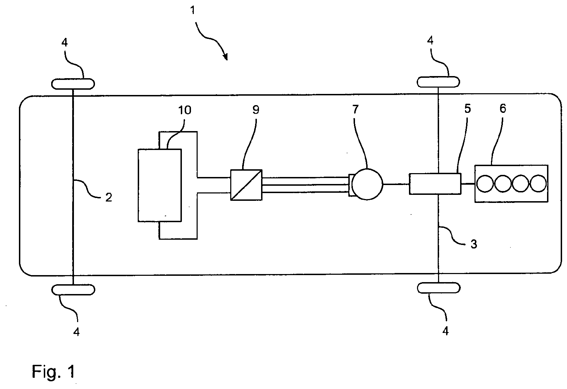

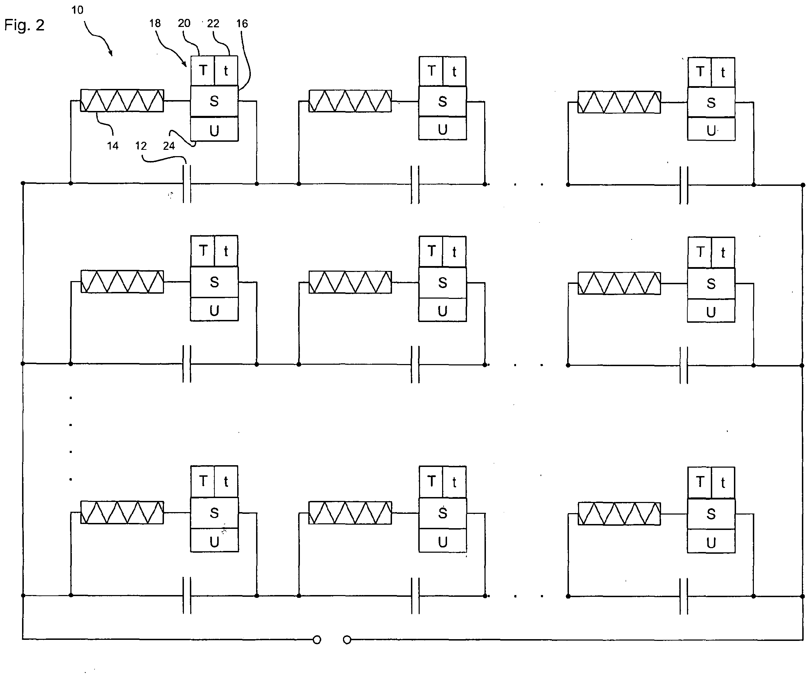

Weitere vorteilhafte Ausgestaltungen des erfindungsgemäßen Systems ergeben sich ferner aus dem Ausführungsbeispiel, welches nachfolgend anhand der Figuren 1,2 näher beschrieben ist.

Es zeigen:

Figur 1　einen beispielhaften Aufbau eines Hybridfahrzeugs;

Figur 2　eine schematische Darstellung einer ersten dezentralen Ausführungsform eines System zur Speicherung elektrischer Energie.

Figur 3　zeigt ein nicht beanspruchtes Beispiel eines Systems zur Speicherung elektrischer Energie.

In Figur 1 ist ein beispielhaftes Hybridfahrzeug 1 angedeutet. Es verfügt über zwei Achsen 2, 3 mit je zwei beispielhaft angedeuteten Rädern 4. Die Achse 3 soll dabei eine angetriebene Achse des Fahrzeugs 1 sein, während die Achse 2 in an sich bekannter Art und Weise lediglich mitläuft. Zum Antrieb der Achse 3 ist beispielhaft ein Getriebe 5 dargestellt, welches die Leistung von einer Verbrennungskraftmaschine 6 und einer elektrischen Maschine 7 aufnimmt und in den Bereich der angetriebenen Achse 3 leitet. Im Antriebsfall kann die elektrische Maschine 7 alleine oder ergänzend zur Antriebsleistung der Verbrennungskraftmaschine 6 Antriebsleistung in den Bereich der angetriebenen Achse 3 leiten und somit das Fahrzeug 1 antreiben beziehungsweise den Antrieb des Fahrzeugs 1 unterstützen. Außerdem kann beim Abbremsen des Fahrzeugs 1 die elektrische Maschine 7 als Generator betrieben werden, um so beim Bremsen anfallende Leistung zurückzugewinnen und entsprechend zu speichern. Um beispielsweise bei einem Einsatz in einem Stadtbus als Fahrzeug 1 auch für Bremsvorgänge aus höheren Geschwindigkeiten, welche bei einem Stadtbus sicherlich bei maximal ca. 70 km/h liegen werden, einen ausreichenden Energieinhalt bereitstellen zu können, muss in diesem Fall ein System 10 zur Speicherung elektrischer Energie vorgesehen werden, welche einen Energieinhalt in der Größenordnung von 350 bis 700 Wh aufweist. Damit lassen sich auch Energien, welche beispielsweise bei einem ca. 10 Sekunden langen Bremsvorgang aus einer solchen Geschwindigkeit anfallen, über die elektrische Maschine 7, welche typischerweise eine Größenordnung von ca. 150 kW haben wird, in elektrische Energie umzusetzen und diese in dem System 10 zu speichern.

Zur Ansteuerung der elektrischen Maschine 7 sowie zum Laden und Entladen des Systems 10 zur Speicherung elektrischer Energie weist der Aufbau gemäß Figur 1 einen Umrichter 9 auf, welcher in an sich bekannter Art und Weise mit einer integrierten Steuereinrichtung für das Energiemanagement ausgebildet ist. Über den Umrichter 9 mit der integrierten Steuereinrichtung wird dabei der Energiefluss zwischen der elektrischen Maschine 7 und dem System 10 zur Speicherung der elektrischen Energie entsprechend koordiniert. Die Steuereinrichtung sorgt dafür, dass beim Bremsen im Bereich der dann generatorisch angetriebenen elektrischen Maschine 7 anfallende Leistung soweit möglich in das System 10 zur Speicherung der elektrischen Energie eingespeichert wird, wobei eine vorgegebene obere Spannungsgrenze des Systems 10 im Allgemeinen nicht überschritten werden darf. Im Antriebsfall koordiniert die Steuereinrichtung im Umrichter 9 die Entnahme von elektrischer Energie aus dem System 10, um in diesem umgekehrten Fall die elektrische Maschine 7 mittels dieser entnommenen Leistung anzutreiben. Neben dem hier beschriebenen Hybridfahrzeug 1, welches beispielsweise ein Stadtbus sein kann, wäre ein vergleichbarer Aufbau selbstverständlich auch in einem reinen Elektrofahrzeug denkbar.

Figur 2 zeigt schematisch einen Ausschnitt aus einem erfindungsgemäßen System 10 zur Speicherung elektrischer Energie in einer ersten dezentralen Ausführungsform. Prinzipiell sind verschiedene Arten des Systems 10 zur Speicherung elektrischer Energie denkbar. Typischerweise ist ein derartiges System 10 so aufgebaut, dass eine Vielzahl von Speicherzellen 12 typischerweise in Reihe in dem System 10 verschaltet sind. Diese Speicherzellen 10 können dabei Akkumulatorzellen und/oder Superkondensatoren sein, oder auch eine beliebige Kombination hiervon. Für das hier dargestellte Ausführungsbeispiel sollen die Speicherzellen 12 allesamt als Superkondensatoren, d.h. als Doppelschicht-Kondensatoren ausgebildet sein, welche in einem System 10 zur Speicherung elektrischer Energie in dem mit dem Hybridantrieb ausgerüsteten Fahrzeug 1 eingesetzt werden sollen. Der Aufbau kann dabei bevorzugt in einem Nutzfahrzeug, beispielsweise einem Omnibus für den Stadt-/Nahverkehr, eingesetzt werden. Hierbei wird durch häufige Anfahr- und Bremsmanöver in Verbindung mit einer sehr hohen Fahrzeugmasse eine besonders hohe Effizienz der Speicherung der elektrischen Energie durch die Superkondensatoren erreicht, da vergleichsweise hohe Ströme fließen. Da Superkondensatoren als Speicherzellen 12 einen sehr viel geringeren Innenwiderstand aufweisen als beispielsweise Akkumulatorzellen, sind diese für das hier näher beschriebene Ausführungsbeispiel zu bevorzugen.

Wie bereits erwähnt, sind in der Figur 2 die Speicherzellen 12 zu erkennen. Dabei sind lediglich drei seriell verbundenen Speicherzellen 12 dargestellt. Bei dem oben genannten Ausführungsbeispiel und einer entsprechenden elektrischen Antriebsleistung von ca. 100 bis 200 kW, beispielsweise 120 kW, wären dies in einem realistischen Aufbau insgesamt ca. 150 bis 250 Speicherzellen 12. Wenn diese als Superkondensatoren mit einer derzeitigen oberen Spannungsgrenze von ca. 2,7 V je Superkondensator und einer Kapazität von 3000 Farad ausgebildet sind, wäre eine realistische Anwendung für den Hybridantrieb eines Stadtomnibusses gegeben.

Wie in Figur 2 dargestellt, weist jede der Speicherzellen 12 einen parallel zu der jeweiligen Speicherzelle 12 geschalteten elektrischen Verbraucher in Form eines ohmschen Widerstands 14 auf. Dieser ist in Reihe mit einem Schaltglied 16 parallel zu jeder der Speicherzellen 12, in diesem Fall parallel zu jedem der Superkondensatoren 12 geschaltet. Der Schalter 16 ist als Schwellwertschalter ausgebildet und ist Teil einer Steuereinrichtung 18, welche folgende Funktionalitäten aufweist: Die Steuereinrichtung 18 umfasst eine Spannungsüberwachung 24 des Superkondensators 12. Sobald dieser eine obere Schwellenspannung übersteigt, wird der Schalter 16 geschlossen, sodass über den Widerstand 14 ein Strom aus dem Superkondensator 12 fließen kann. Damit wird die in ihm befindliche Ladung und somit auch die Spannung entsprechend verringert, sodass ein erneutes Überschreiten des Schwellenspannungswerts beim selben Superkondensator 12 wie zuvor, vermieden wird.

Ferner weist die Steuereinrichtung 18 einen Temperatursensor 20 auf. Dieser erfasst die Temperatur der Speicherzelle 12 direkt oder ihrer unmittelbaren Umgebung. Dabei kann insbesondere auch vorgesehen sein, dass ein Temperatursensor für zwei unmittelbar benachbarte Speicherzellen 12 eingesetzt wird. Die Steuereinrichtung 18 setzt nun den erfassten Messwert des Temperatursensors 20 in eine Steuerung des Schwellenspanriungswerts um. Insbesondere reguliert die Steuereinrichtung 18 den Schwellenspannungswert herunter, wenn eine höhere Spannungszellentemperatur vorliegt und umgekehrt. So kann beispielsweise bei einer Zellentemperatur von 10 °C die maximale zulässige Zellenbetriebsspannung, also die Schwellenspannung der Zelle, bei 2,7 V liegen, während sie bei 35 °C auf 2,4 V eingeregelt wird. Dabei kann auf die systematische Abhängigkeit zwischen Betriebstemperatur der Speicherzelle 12 und ihrer Schwellenspannung in der Form eingegangen werden, dass in der Steuereinrichtung eine Zuordnungstabelle hinterlegt ist, die für jeden Temperaturmesswert einen entsprechenden Schwellenspannungswert zuordnet. Gegebenenfalls können Zwischenwerte geeignet interpoliert werden. Es kann aber auch ein funktionaler Zusammenhang eingesetzt werden, um die Schwellenspannung an die momentan herrschenden Speicherzellentemperatur anzupassen.

Alternativ kann aber auch eine Regelung der Schwellenspannung entlang einer geeigneten Regelgröße vorgesehen sein.

Um zu verhindern, dass, sobald die Spannung unter den Schwellenspannungswert abfällt, der Schalter 16 wieder geöffnet wird und somit eine sehr hohe Spannung in dem jeweiligen Superkondensator 12 verbleibt, ist außerdem eine Zeitschalteinheit 22 vorgesehen. Bei einer reinen Schaltung über die Spannungserfassung 24 der Schalteinheit 18 würde der Schalter 16 nach dem Unterschreiten der Schwellenspannung wieder geöffnet. Der Superkondensator 12 wäre dann weiterhin auf einem sehr hohen Spannungsniveau. Kommt es nun zu einem erneuten Laden des System 10, würde genau dieser Superkondensator 12 sofort wieder über die Spannungsgrenze hinaus geladen werden, was dann zu einem erneuten Schließen des Schalters 16 führt. Durch die Integration der Zeitschaltfunktion 22, welche den Schalter 16, nachdem dieser einmal über die Spannungserfassung U geschlossen wurde, für eine vorgegebene Zeit geschlossen hält, wird mehr Ladung aus dem Superkondensator 12 abgebaut, als ohne die Zeitschalteinheit 22. Dadurch wird die Spannung in dem Superkondensator 12 so weit verringert, dass diese nach einem Entladen, beispielsweise durch ein Anfahren des Fahrzeugs 1 und einem danach erfolgenden erneuten Laden des System 10 bei einem Abbremsen nicht wieder über die obere Grenzspannung gelangt. Allenfalls werden jetzt andere Superkondensatoren 12 in einem entsprechend hohen Spannungsbereich liegen und die soeben beschriebene Prozedur ihrerseits erfahren. Insgesamt kommt es damit durch die Integration der Zeitschaltfunktion 22 über die Betriebszeit hinweg zu einer raschen Vergleichmäßigung der Spannungen der einzelnen Superkondensatoren 12 des Systems 10.

Die Zeitschalteinheit 22 kann dabei insbesondere so ausgebildet sein, dass eine feste Zeit von beispielsweise einigen Minuten vorgegeben ist. Zusammen mit der Größe der jeweiligen einzelnen Speicherzelle 12 und dem Wert des elektrischen Widerstands 14 ergibt sich so eine entsprechende Entladung. Dabei sind Entladungen in der Größenordnung von 3 - 5 % der Nennladung des entsprechenden Superkondensators 12 sinnvoll. Beim erneuten Laden wird dann erreicht, dass dieser Superkondensator 12 nicht wieder die vorgegebene Grenzspannung überschreitet. Dadurch, dass zumindest verhindert wird, dass einer der Superkondensatoren 12 in sehr schnellem Wechsel nacheinander die Grenzspannung mehrfach überschreitet, wird bereits eine deutliche Zunahme der Lebensdauer der Superkondensatoren 12 und damit des Systems 10 erzielt. In Kombination mit der bereits beschriebenen Steuerung der Schwellenspannung ergibt sich insgesamt eine signifikant erhöhte Lebensdauer des Systems zur Speicherung elektrischer Energie.

Greift man das oben genannte Zahlenbeispiel nochmals auf, so würde sich bei einem Ableitstrom von 1 A die Spannung des entsprechenden Superkondensators in fünf Minuten um ca. 0,1 V gesenkt haben. Bei einem Ableitstrom von 250 mA dementsprechend in ca. 20 Minuten. Je nach Größe der Speicherzelle 12 und dem möglichen Ableitstrom, welcher über den Widerstand 14 geleitet werden kann, ergibt sich so eine Zeitspanne von ca. 5 bis 20 Minuten, über denen über die Zeitschalteinheit 22 der Schalter 16 geschlossen gehalten wird. Bei anderen Größenordnungen der Widerstände, der Ströme und der eingesetzten Speicherzellen 12 kann dieser Wert selbstverständlich entsprechend angepasst sein. Das so aufgebaute System 10 zur Speicherung elektrischer Energie kann also auch bei hochdynamischen Lade- und Entladezyklen eingesetzt werden, ohne dass die Lebensdauer der Speicherzellen 12 durch unnötig hohe Spannungen im Bereich der Speicherelemente 12 entsprechend verringert wird.

In dem vorliegenden Ausführungsbeispiel der Figur 2 kann der Aufbau der Steuereinrichtung 18, des elektrischen Widerstands 14, des Schalters 16, des Temperatursensors 20 und der Zeitschalteinheit 22 als integrierte Elektronikeinheit so realisiert werden, dass diese für jede einzelne der Speicherzellen 12 eigenständig aufgebaut wird. Hierfür reicht im Allgemeinen eine kleine integrierte Schaltung aus, welche die Spannung U in der Speicherzelle 12 entsprechend überwacht und den Schalter 16, welcher beispielsweise als elektronischer Schalter 16 in das Bauteil integriert ausgeführt ist, entsprechend betätigt. Der Widerstand 14 kann dann auf diese Mini-Platine in an sich bekannter Art und Weise aufgesetzt werden. In gleicher Weise kann auch der Temperatursensor 22 auf dieser Platine angeordnet werden, sofern eine ausreichende thermische Ankopplung der Platine an die Speicherzelle 12 möglich ist. Andernfalls müsste eine geeignete Zuführungsleitung von dem Temperatursensor zu der Platine vorgesehen werden.

Da die Zeitschalteinheit 22 typischerweise immer eine vorgegebene Zeit lang den Schalter 16 geschlossen hält, nachdem dieser aufgrund der Spannung der Speicherzelle 12 aktiviert wurde, kann auch diese Zeit fest in der Zeitschalteinheit 22 beziehungsweise der integrierten Elektronikeinheit mit integriert sein. Dies kann beispielsweise durch die Programmierung einer fest vorgegebenen Zeit in einer integrierten Schaltung ausgeführt sein. Es wäre auch denkbar, dies schaltungstechnisch dadurch zu lösen, dass in der Elektronikeinheit 14 über ein geeignetes Bauelement, insbesondere einen Kondensator, an einem Ausgang der Steuereinheit 18 diese Zeit fest vorgegeben wird. Der Aufbau kann somit sehr einfach realisiert werden, da keinerlei Ansteuerung der Elektronikeinheit von außerhalb des Systems 10 notwendig ist. Das System 10 wird vielmehr selbsttätig für einen Zellspannungsausgleich, welcher auch hochdynamische Lade- und Entladezyklen ermöglicht, sorgen. Dieser Aufbau mit dezentralen Elektronikeinheiten ist dabei sehr einfach und kann vollkommen autark realisiert werden. Eine Ansteuerung des System 10 ist dann lediglich als Ganzes notwendig, beispielsweise beim Entladen und insbesondere beim Laden innerhalb eines vorgegebenen Spannungsfensters.

Neben der beschriebenen dezentralen Ausführungsform kann alternativ oder zusätzlich eine temperaturabhängige Steuerung der Gesamtspannung der Speicherzellen vorgesehen sein. Dabei ist vorgesehen, dass die maximale (Gesamt-) Spannung der Speicherzellen in Abhängigkeit von einer Temperatur variiert wird. So können beispielsweise bei Temperaturen unter 10 °C als Einzelzellen-Betriebsspannung 2,7 V je Zelle zugelassen sein. Bezogen auf die Gesamtzahl an in Reihe geschalteten Speicherzellen ergibt sich damit eine bestimmte maximale Gesamtspannung bei dieser niedrigen Umgebungs- oder Speicherzellentemperatur. Bei einer Temperatur von beispielsweise 35 °C sind dann entsprechend nur noch 2,4 V je Zelle zuzulassen, so dass sich auch eine niedrigere maximale Gesamtspannung des Systems zur Speicherung elektrischer Energie ergibt. Damit wird das System zur Speicherung elektrischer Energie bei niedrigen Temperaturen und/oder günstigen Kühlungsbedingungen immer noch voll genutzt und erzielt auch die gewünschte Lebensdauer.

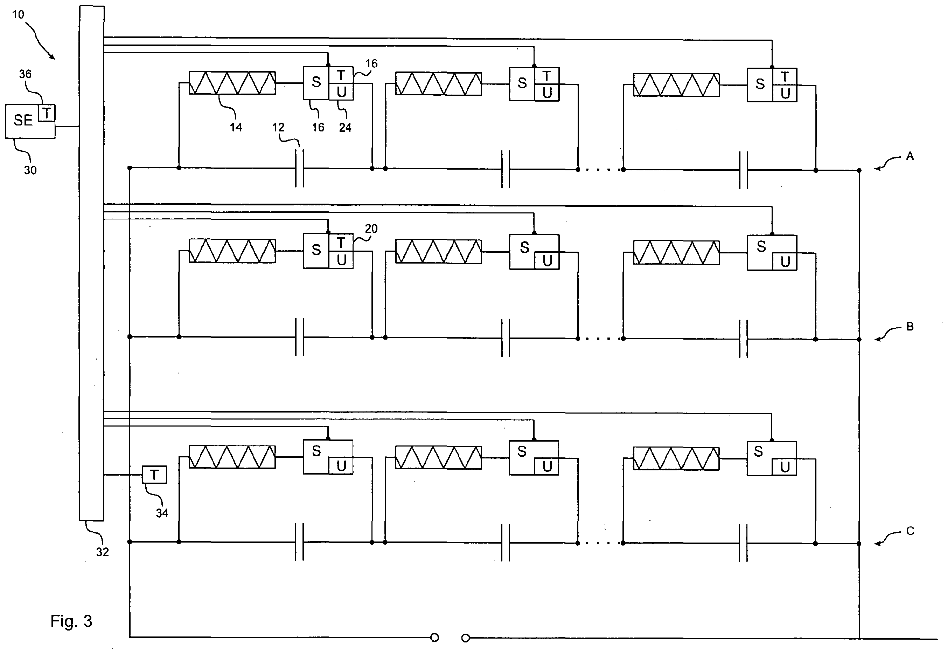

Figur 3 zeigt eine schematische Darstellung einer zweiten zentralen Ausführungsform eines System 10 zur Speicherung elektrischer Energie. Identische oder vergleichbare Komponenten werden mit gleichen Bezugszeichen wie in den Figuren 1 und 2 bezeichnet. Im Unterschied zu der Ausführungsform der Figur 2 erfolgt bei dieser Ausgestaltung der Erfindung die Steuerung der Schwellenspannung der einzelnen Speicherzellen 12 nicht dezentral durch einzelne, an den Speicherzellen 12 angeordnete Steuereinrichtungen, sondern durch eine zentral angeordnete Steuereinrichtung 30. Eine derartige zentrale Steuereinrichtung 20 kann auch mit an Speicherzellen angeordneten dezentralen Steuereinrichtungen 10 kombiniert werden. Diese ist mit einem Bus 32 verbunden, an den wiederum alle Speicherzellen 12 angebunden sind. Somit weisen die einzelnen Speicherzellen 12 lediglich ein Schaltglied 16 sowie gegebenenfalls einen Temperatursensor 20 auf. Die Steuereinrichtung 30 kann mittels des Bus 32 die an den Speicherzellen angeordneten Schaltglieder 16 ansteuern und somit eine Entladung der Speicherzellen 12 bei Überschreiten der Schwellenspannung über einen mit dem Schaltglied 16 in Reihe geschalteten elektrischen Verbraucher 14 wie etwa einem ohmschen Widerstand bewirken. Auch hier kann ein zeitgesteuerter Nachlauf des Entladevorgangs wie oben detailliert ausgeführt erfolgen. In der entgegensetzten Übertragungsrichtung empfängt die Steuereinrichtung 30 die momentan an der Speicherzelle 12 anliegende Zellenspannung und gegebenenfalls Temperaturwerte.

Die Darstellung der Figur 3 ist wiederum lediglich schematisch, insbesondere hinsichtlich der Anzahl an Speicherzellen 12. Die bei einer realen Ausgestaltung auftretenden Zahlenwerte wurden bereits oben ausgeführt. Zur Veranschaulichung dreier verschiedener Temperaturerfassungsszenarien sind in Figur 3 drei Blöcke A, B, C dargestellt, die hinsichtlich ihrer Temperaturerfassung und damit auch der entsprechenden Ansteuerung unterschiedlich ausgeführt sind.

Die in Block A zusammengefassten Speicherzellen 12 weisen jede einen Temperatursensor 20 auf. Somit wird die Temperatur jeder einzelnen Speicherzelle 12 erfasst und es erfolgt eine individuelle speicherzellenbezogene Steuerung der Schwellenbetriebstemperatur.

In Block B weist lediglich beispielhaft nur eine Speicherzelle 12 einen Temperatursensor 20 auf. Es könnte aber vorgesehen sein, nur einen bestimmten Anteil aller in dem Block B zusammengefassten Speicherzellen 12 mit einem Temperatursensor auszustatten. Es erfolgt mittels des/der für den Block B ermittelten Temperaturwerts/-werte eine blockbezogene Steuerung der Schwellenspannung auf der Basis eines anhand einer Speicherzelle 12 erfassten Temperaturwerts.

Für Block C ist ebenfalls eine blockbezogene Steuerung der Schwellenspannung vorgesehen. Im Unterschied zu Block C wird hierbei nicht der Temperaturwert einer Speicherzelle, sondern mittels eines Temperatursensors 34 der eines Bauteils erfasst, das in direktem oder indirektem thermischen Kontakt mit einer, mehreren oder allen Speicherzellen 12 steht. Bei dem Bauteil kann es sich beispielsweise um einen gemeinsamen Kühlkörper oder um ein Gehäusebauteil handeln.

Die anhand der Blöcke A, B, und C dargestellten Szenarien sind jeweils alleine für das Gesamtsystem oder in beliebiger Kombination anwendbar. Desweiteren kann vorgesehen sein, dass eine zentrale temperaturabhängige Steuerung der Gesamtspannung des Systems zur Speicherung elektrischer Energie beispielsweise über den Elektroantrieb eines Hybridsystems erfolgen kann. Dieses System einer Beeinflussung der Gesamtspannung in Abhängigkeit von der Temperatur sowie die weiteren als Szenarien A, B, und C beschriebenen Systeme sind zudem mit den dezentralen Lösungen gemäß der Figur 2 wie oben beschrieben kombinierbar.

Ferner kann in der zentralen Steuereinrichtung 30 zusätzlich oder alleinig ein Temperatursensor 36 vorgesehen sein. Dieser kann beispielsweise die Umgebungstemperatur des Systems 10 zur Speicherung elektrischer Energie erfassen. Dabei kann es sich beispielsweise um eine in der direkten Umgebung des Energiespeichersystems 10 erfasste oder aber auch um eine Umgebungstemperatur des Fahrzeugs 1 selbst handeln.

**Patentansprüche**

1. System (10) zur Speicherung elektrischer Energie, umfassend mehrere Speicherzellen (12), die eine Betriebsspannung aufweisen, wobei parallel zu einer Speicherzelle (12) ein elektrischer Verbraucher (14) sowie ein Schaltglied (16) in Reihe mit dem Verbraucher (14) angeordnet sind und wobei das Schaltglied (16) bei Erreichen oder Überschreiten einer Schwellenspannung geschlossen wird, und wobei das System (10) eine Steuereinrichtung (18, 30) umfasst, welche dazu eingerichtet ist, die Schwellenspannung in Abhängigkeit von einer Temperatur zu beeinflussen, **dadurch gekennzeichnet, dass** das Schaltglied (16), der elektrische Verbraucher (14) und die Steuereinrichtung (18) für die Speicherzelle (12) als eigenständige im Bereich der Speicherzelle (12) angeordnete Elektronikeinheit ausgebildet sind, so dass ein dezentraler Ausgleich der Betriebsspannungen stattfindet.

2. System nach Anspruch 1, **dadurch gekennzeichnet, dass** die Steuereinrichtung (18, 30) einen Temperatursensor (20, 36) umfasst.

3. System nach Anspruch 2, **dadurch gekennzeichnet, dass** der Temperatursensor (18) eine Temperatur der Speicherzelle (12) oder dass der Temperatursensor (32) eine Umgebungstemperatur erfasst.

4. System nach einem der vorhergehenden Ansprüche, **dadurch gekennzeichnet, dass** der Verbraucher ein Widerstand (14) und/oder die Speicherzelle ein Superkondensator (12) ist.

5. System nach einem der vorhergehenden Ansprüche, **dadurch gekennzeichnet, dass** das Schaltglied ein Schwellwertschalter (16) ist.

6. System nach einem der vorhergehenden Ansprüche, **dadurch gekennzeichnet, dass** die Steuereinheit (18) eine Zeitschalteinheit (22) umfasst, welche das geschlossene Schaltglied (16) nach einem Schließen für eine vorgegebene Zeit geschlossen hält.

7. System nach einem der vorhergehenden Ansprüche, **dadurch gekennzeichnet, dass** die vorgegebene Zeit über ein geeignetes Bauelement, insbesondere einen Kondensator, fest vorgegeben ist.

8. System nach einem der vorhergehenden Ansprüche, **dadurch gekennzeichnet, dass** alle Speicherzellen (12) vom selben Typ ausgebildet und in Reihe zueinander verschaltet sind.

**Claims**

1. A system (10) for storing electrical energy, comprising multiple storage cells (12) which have an operating voltage, wherein an electrical consumer (14) and a switching element (16) in series with the consumer (14) are arranged in parallel to a storage cell (12) and wherein the switching element (16) is closed upon reaching or exceeding a threshold voltage, and wherein the system (10) comprises a control unit (18, 30), which is configured for the purpose of influencing the threshold voltage as a function of a temperature, **characterized in that** the switching element (16), the electrical consumer (14), and the control unit (18) for the storage cell (12) are designed as an independent electronics unit arranged in the region of the storage cell (12), and therefore a decentralized balancing of the operating voltages takes place.

2. The system according to Claim 1, **characterized in that** the control unit (18, 30) comprises a temperature sensor (20, 36).

3. The system according to Claim 2, **characterized in that** the temperature sensor (18) detects a temperature of the storage cell (12), or the temperature sensor (32) detects an ambient temperature.

4. The system according to any one of the preceding claims, **characterized in that** the consumer is a resistor (14) and/or the storage cell is a supercapacitor (12).

5. The system according to any one of the preceding claims, **characterized in that** the switching element is a threshold value switch (16).

6. The system according to any one of the preceding claims, **characterized in that** the control unit (18) comprises a time switching unit (22), which keeps the closed switching element (16) closed for a predefined time after closing.

7.  The system according to any one of the preceding claims, **characterized in that** the predefined time is permanently predefined via a suitable component, in particular a capacitor.

8.  The system according to any one of the preceding claims, **characterized in that** all storage cells (12) are formed by the same type and are interconnected in series with one another.


**Revendications**

1.  Système (10) de stockage d'énergie électrique, comprenant plusieurs cellules de stockage (12) présentant une tension de fonctionnement, un consommateur électrique (14) et un élément de commutation (16) disposé en série avec le consommateur (14) étant disposés en parallèle avec une cellule de stockage (12), l'élément de commutation (16) étant fermé lorsqu'une tension de seuil est atteinte ou dépassée et le système (10) comprenant un dispositif de commande (18, 30) qui est conçu pour influencer la tension de seuil en fonction d'une température, **caractérisé en ce que** l'élément de commutation (16), le consommateur électrique (14) et le dispositif de commande (18) pour la cellule de stockage (12) sont réalisés sous la forme d'une unité électronique indépendante disposée dans la zone de la cellule de stockage (12), de sorte qu'une compensation décentralisée des tensions de fonctionnement a lieu.

2.  Système selon la revendication 1, **caractérisé en ce que** le dispositif de commande (18, 30) comprend un capteur de température (20, 36).

3.  Système selon la revendication 2, **caractérisé en ce que** le capteur de température (18) détecte une température de la cellule de stockage (12) ou **en ce que** le capteur de température (32) détecte une température ambiante.

4.  Système selon l'une des revendications précédentes, **caractérisé en ce que** le consommateur est une résistance (14) et/ou la cellule de stockage un supercondensateur (12).

5.  Système selon l'une des revendications précédentes, **caractérisé en ce que** l'élément de commutation est un commutateur à valeur seuil (16).

6.  Système selon l'une des revendications précédentes, **caractérisé en ce que** l'unité de commande (18) comprend une unité de commutation temporisée (22) qui maintient l'élément de commutation (16) fermé pendant un temps prédéfini après une fermeture.

7.  Système selon l'une des revendications précédentes, **caractérisé en ce que** le temps prédéfini est prédéfini de façon fixe au moyen d'un composant approprié, en particulier d'un condensateur.

8.  Système selon l'une des revendications précédentes, **caractérisé en ce que** toutes les cellules de stockage (12) sont du même type et sont connectées en série les unes aux autres.

Fig. 1

Fig. 2

Fig. 3

**IN DER BESCHREIBUNG AUFGEFÜHRTE DOKUMENTE**

**In der Beschreibung aufgeführte Patentdokumente**

- US 20030210017 A